# EUROPEAN PATENT SPECIFICATION

(11) **EP 4 027 665 B1**
(45) Date of publication and mention of the grant of the patent: **02.07.2025**
(21) Application number: 20870631.7
(22) Date of filing: 29.09.2020
(51) Int. Cl.: H04W 72/02, H04W 4/40

(54) **COMMUNICATION METHOD AND COMMUNICATION DEVICE**
KOMMUNIKATIONSVERFAHREN UND KOMMUNIKATIONSVORRICHTUNG
PROCÉDÉ DE COMMUNICATION ET DISPOSITIF DE COMMUNICATION

(30) Priority: 30.09.2019 CN 201910944862
(43) Date of publication of application: 13.07.2022
(73) Proprietor: Huawei Technologies Co., Ltd., Longgang Shenzhen, Guangdong 518129 (CN)
(72) Inventor: WANG, Jun, Shenzhen, Guangdong 518129 (CN); PENG, Wenjie, Shenzhen, Guangdong 518129 (CN); WEI, Dongdong, Shenzhen, Guangdong 518129 (CN); DAI, Mingzeng, Shenzhen, Guangdong 518129 (CN); XIAO, Xiao, Shenzhen, Guangdong 518129 (CN); XU, Haibo, Shenzhen, Guangdong 518129 (CN)
(74) Representative: Epping - Hermann - Fischer
(86) International application number: PCT/CN2020/118859
(87) International publication number: WO 2021/063356

(56) References cited:
- WO-A1-2018/027926
- WO-A1-2019/149182
- WO-A1-2019/153234
- CN-A- 109 952 806
- ZTE ET AL.: "Consideration on NR V2X Mode 1 Resource Allocation", 3GPP TSG-RAN WG2#104 R2-1816980, 16 November 2018 (2018-11-16), XP051480913
- ERICSSON: "QoS principles", 3GPP TSG-RAN WG2 #104 R2-1817924, 16 November 2018 (2018-11-16), XP051481809

## Description

### TECHNICAL FIELD

This application relates to the communication field, and more specifically, to a communication method and apparatus.

### BACKGROUND

Currently, a requirement of ensuring reliability and/or a communication range is imposed on new radio (new radio, NR) vehicle to everything (vehicle to everything, V2X). However, current V2X does not support the reliability and/or communication range requirement. Therefore, how to ensure the reliability and/or the communication range becomes an urgent problem to be resolved.

See also publication WO2018/027926.

### SUMMARY

This application provides a communication method and apparatus, to ensure a reliability and/or communication range requirement.

The invention is defined by the appended claims.

### BRIEF DESCRIPTION OF DRAWINGS

FIG. 1 is a schematic diagram of a V2X communication architecture;
FIG. 2 is a schematic flowchart of a communication method according to this application;
FIG. 3 is a schematic block diagram of an apparatus according to this application;
FIG. 4 is a schematic diagram of a structure of a terminal device according to this application; and
FIG. 5 is a schematic block diagram of another apparatus according to this application.

### DESCRIPTION OF EMBODIMENTS

The following describes the technical solutions of this application with reference to the accompanying drawings.

The technical solutions provided in this application may be applied to a device to device (device to device, D2D) scenario, and optionally, may be applied to a vehicle to everything (vehicle to everything, V2X) scenario. For example, the V2X scenario may be specifically any one of the following systems: vehicle to vehicle (vehicle to vehicle, V2V) communication, vehicle to pedestrian (vehicle to pedestrian, V2P) communication, a vehicle to network (vehicle to network, V2N) service and vehicle to infrastructure (vehicle to infrastructure, V2I) communication.

For example, D2D may be long term evolution (long term evolution, LTE) D2D or new radio (new radio, NR) D2D, or may be D2D in another communication system that may appear as technologies develop. Similarly, V2X may be LTE V2X or NR V2X, or may be V2X in another communication system that may appear as technologies develop.

In embodiments of this application, a terminal device may be user equipment (user equipment, UE), a vehicle, a vehicle-mounted sensor, an on-board unit (on board unit, OBU), a road side unit (road side unit, RSU), a subscriber unit, a subscriber station, a mobile station, a remote station, a remote terminal, a mobile device, a user terminal, a terminal, a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a wearable device, or the like.

In embodiments of this application, a network device is an access network device. The access network device may be, for example, a base station NodeB, an evolved NodeB (evolved NodeB, eNB), or a next generation NodeB (next generation NodeB, gNB) in a 5G mobile communication system, a transmission point, a base station in a further mobile communication system, an access node in a wireless fidelity (wireless fidelity, Wi-Fi) system, or one or a group of antenna panels (which includes a plurality of antenna panels) of a base station in a 5G system. Alternatively, a radio access network device may be a network node that constitutes a gNB or a transmission node, for example, a baseband unit (baseband unit, BBU), a distributed unit (distributed unit, DU), a centralized unit (centralized unit, CU), a centralized unit control plane (centralized unit control plane, CU-CP) and a centralized unit user plane (centralized unit user plane, CU-UP). A specific technology and a specific device form that are used by the radio access network device are not limited in embodiments of this application.

In some deployments, the gNB may include the CU and the DU. One CU may be connected to one DU, or a plurality of DUs may share one CU. This can reduce costs and facilitate network expansion. The CU implements some functions of the gNB, and the DU implements some functions of the gNB. For example, the CU is responsible for processing a non-real-time protocol and service, to implement functions of a radio resource control (radio resource control, RRC) layer and a packet data convergence protocol (packet data convergence protocol, PDCP) layer. The DU is responsible for processing a physical layer protocol and a real-time service, to implement functions of a radio link control (radio link control, RLC) layer, a media access control (media access control, MAC) layer, and a physical (physical, PHY) layer. Division of the CU and the DU may be performed based on the foregoing protocol stack. The foregoing protocol stack division manner is not completely limited in embodiments of this application, and there may be another division manner. For details, refer to the TR38.801 v14.0.0.

The CU and the DU are connected to each other through an F1 interface. The CU indicates that the gNB is connected to a core network through an Ng interface. Further, the centralized unit CU may further be divided into a control plane (CU-CP) and a user plane (CU-UP). The CU-CP is responsible for a control plane function, and mainly includes RRC and a packet data convergence protocol control plane (packet data convergence protocol control plane, PDCP-C). The PDCP-C is mainly responsible for at least one function of data encryption and decryption, integrity protection, data transmission, and the like on the control plane. The CU-UP is responsible for a user plane function, and mainly includes a service data adaptation protocol (service data adaptation protocol, SDAP) and a packet data convergence protocol user plane (packet data convergence protocol user, PDCP-U). The SDAP is mainly responsible for processing data of the core network and mapping a flow to a bearer. The PDCP-U layer is mainly responsible for at least one function of encryption and decryption, integrity protection, header compression, serial number maintenance, data transmission, and the like on a data plane. The CU-CP is connected to the CU-UP through an E1 interface. The CU-CP indicates that the gNB is connected to the core network through the Ng interface. The CU-CP is connected to the DU through F1-C (a control plane). The CU-UP is connected to the DU through F1-U (a user plane). Certainly, in another possible implementation, the PDCP-C is alternatively on the CU-UP.

The gNB may further include an active antenna unit (active antenna unit, AAU). The AAU implements some physical layer processing functions, radio frequency processing, and a function related to an active antenna. Information at the RRC layer eventually becomes information at the PHY layer, or is converted from information at the PHY layer. Therefore, in this architecture, higher layer signaling, for example, RRC layer signaling, may also be considered as being sent by the DU or sent by the DU and the AAU. It may be understood that the network device may be a device including one or more of a CU node, a DU node, a CU-CP node, a CU-UP node, and an AAU node. In addition, the CU may be used as a network device on an access network, or may be used as a network device on the core network (core network, CN). This is not limited in this application.

In embodiments of this application, the terminal device or the network device includes a hardware layer, an operating system layer running at the hardware layer, and an application layer running at the operating system layer. The hardware layer includes hardware such as a central processing unit (central processing unit, CPU), a memory management unit (memory management unit, MMU), and a memory (which may also be referred to as a main memory). The operating system may be any one or more computer operating systems that implement service processing by using a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the terminal device or the network device, or a function module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (compact disc, CD), a digital versatile disc (digital versatile disc, DVD)), a smart card, and a flash component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel and various other media that can store, include, and/or carry instructions and/or data.

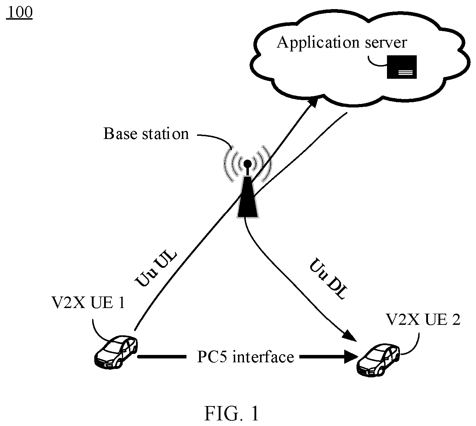

FIG. 1 is a schematic diagram of a V2X communication architecture. As shown in FIG. 1, the architecture includes two types of communication interfaces: a PC5 interface and a Uu interface. The PC5 interface is a direct communication interface between V2X UEs (for example, V2X UE 1 and V2X UE 2 shown in the figure). A direct communication link between V2X UEs is also defined as a sidelink (sidelink, SL). Uu interface communication is a communication mode in which a sender V2X UE (for example, the V2X UE 1) sends V2X data to a base station through the Uu interface, the base station sends the data to a V2X application server for processing, then, the V2X application server delivers processed data to a base station, and then the base station sends the data to a receiver V2X UE (for example, the V2X UE 2). In the Uu interface communication mode, a base station that forwards uplink data of the sender V2X UE to the application server and a base station that forwards downlink data delivered by the application server to the receiver V2X UE may be a same base station, or may be different base stations. This may be specifically determined by the application server. It should be understood that sending performed by the sender V2X UE to the base station is referred to as uplink (uplink, UL) transmission, and sending performed by the base station to the receiver V2X UE is referred to as downlink (downlink, DL) transmission.

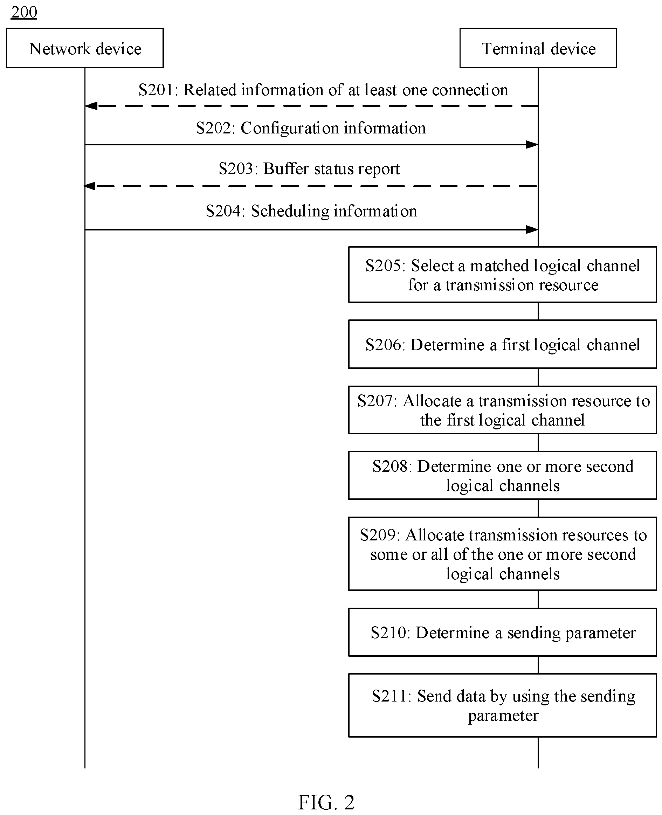

The following describes a communication method provided in this application with reference to FIG. 2. It should be understood that, when the method shown in FIG. 2 is applied to the system shown in FIG. 1, a network device in the method shown in FIG. 2 may correspond to the base station in FIG. 1, a terminal device corresponds to the sender that performs communication through the sidelink in FIG. 1. For example, the terminal device is the V2X UE 1, and the V2X UE 1 may perform sending in a unicast, multicast, or broadcast manner.

FIG. 2 is a schematic flowchart of the communication method according to this application. The following describes steps in the method 200 shown in FIG. 2.

S201: The terminal device reports, to the network device, related information of at least one connection.

The step is an optional step. The reporting herein may be periodic reporting or event-triggered reporting. For example, reporting is performed when a change of a value of any one of the following parameters or parameter combinations exceeds a specific threshold, and the threshold may be preconfigured by the network device.

The terminal device may report, to the network device, related information of each connection established between the terminal device and another terminal device, so that the network device may learn the related information of each connection of the terminal device, for example, a modulation and coding scheme and a MIMO capability that correspond to the connection.

For example, related information of a connection may include one or more of the following:

### (a1) Communication type

The communication type is a communication type of the connection, and may be unicast, multicast, or broadcast.

### (a2) Connection identifier (Connection ID) or group identifier (Group ID)

The connection identifier or the group identifier is an identifier of the connection. If the connection is a unicast connection, the identifier of the connection is the connection ID. If the connection corresponds to a group, the identifier of the connection is the group ID.

For example, the connection ID may be a layer 2 (layer 2, L2) ID or an L1 ID of a peer device in the connection, or may be an identifier of a peer terminal device, for example, one or more of a cell radio network temporary identifier (cell radio network temporary identifier, C-RNTI), a temporary mobile subscriber identity (temporary mobile subscriber identity, TMSI), an international mobile subscriber identity (International Mobile Subscriber Identity Number, IMSI), and an international mobile equipment identity (International Mobile Equipment Identity, IMEI).

The group ID may be identified by an L2 ID or an L1 ID of a group or service.

It should be understood that, if the connection ID does not conflict with the group ID, that is, value ranges of the connection ID and the group ID do not overlap, the related information of the connection may alternatively not include the communication type.

### (a3) Transmit power spectral density (power spectral density, PSD) and/or transmit power (Power)

Because NR-V2X supports an open-loop path loss for a unicast connection, the path loss (passloss, PL) may be related to both a Uu and an SL, or may be related to only either of a Uu and an SL. If the path loss is related to both the Uu and the SL, the terminal device may report the PSD/power corresponding to the connection. The PSD/power is related to a PL of the connection. For example, power = P0 + alpha x (PL), where the power is transmit power of the terminal device, P0 is a default value, alpha is a path loss compensation coefficient (for example, 0 to 2), and the PL is a path loss (Path-Loss, PL) between the two terminal devices corresponding to the connection. The PL may be obtained through calculation by a transmit end based on SL RSRP (reference signal receiving power, RSRP) obtained by a receive end by measuring a reference signal, or may be obtained through calculation by a transmit end based on SL RSRP obtained by a receive end by measuring a reference signal. For example, PL = Tx power - SL RSRP, where Tx power is power of the transmit end.

### (a4) Modulation and coding scheme MCS

The parameter may be determined by the terminal device, or may be previously configured by the network device for the terminal device, and then reported by the terminal device to the network device.

### (a5) Path loss PL

The path loss is the PL corresponding to the connection. For a calculation method, refer to the description provided when the PSD/transmit power is described above.

### (a6) Quantity of transmission repetitions (Repetitions)

The quantity of transmission repetitions is a quantity of times that data of the connection can be repeatedly transmitted. The quantity of transmission repetitions may be determined by the terminal device, or may be configured by the network device in advance.

### (a7) Quantity of PDCP duplications (Duplications)

The quantity of PDCP duplications is a duplication capability that both two terminal devices in a unicast connection or all of a plurality of terminal devices in a multicast connection have, for example, a quantity of duplications of several packets (for example, 2, 3, ...). The parameter may be determined by the terminal device, or may be configured by the network device in advance.

### (a8) Multi-antenna capability, which is also referred to as a MIMO capability

The multi-antenna capability is a MIMO capability corresponding to the connection. For example, two antennas are used for transmitting and two antennas are used for receiving (2T2R) or four antennas are used for transmitting and four antennas are used for receiving (4T4R).

### (a9) Sidelink channel busy ratio (sidelink channel busy ratio, SL CBR) or CSR for short

The sidelink channel busy ratio is, for example, an occupation ratio of an SL time-frequency resource. For example, the sidelink channel busy ratio may be a CBR measured by the transmit end or a CBR measured by the receive end in unicast communication, or a CBR obtained through calculation after CBRs measured by the transmit end and the receive end are comprehensively considered. Alternatively, the sidelink channel busy ratio is a CBR value obtained after being measured or processed by one or more terminal devices in multicast communication.

### (a10) Reliability (Reliability)

The reliability is reliability corresponding to the connection, for example, 99%.

### (a11) Communication range (Range)

The communication range is a minimum communication range corresponding to the connection, for example, 100 m.

### (a12) Reliability plus communication range (Reliability + Range).

The reliability plus the communication range indicates reliability within the communication range. For example, {99%, 100 m} indicates that reliability within 100 m is 99%.

A form of any one of the foregoing parameters (a3) to (a12) that are reported by the terminal device may be any one of the following forms: one or more values of the parameter, one or more value ranges of the parameter, and a threshold of the parameter.

S202: The network device sends configuration information to the terminal device.

Optionally, the configuration information may be determined based on the related information that is reported by the terminal device and that is of the connection. Alternatively, the network device may independently determine the configuration information without depending on the related information that is reported by the terminal device and that is of the connection. The configuration information is used to configure attribute information of each logical channel of the terminal device.

The attribute information of the logical channel is used to determine or indicate reliability and/or a communication range of the logical channel. In other words, the reliability, the communication range, or the reliability plus the communication range of the logical channel may be determined based on the attribute information of the logical channel. In other words, the attribute information of the logical channel has a specific correspondence with the reliability, the communication range, or the reliability plus the communication range.

In this application, the logical channel may include a single logical channel and/or a logical channel group.

For example, the attribute information of the logical channel may be configured when a bearer is configured or is modified. However, this is not limited in this application. The configuration information may be an RRC message or other signaling, for example, a SIB message or a physical layer message.

For example, in a manner, the attribute information of the logical channel is attribute information of an SL radio bearer (Radio Bearer, RB) corresponding to the logical channel. In other words, the attribute information of the logical channel may be configured by configuring the attribute information of the SL RB.

For example, the attribute information of the logical channel may include one or more of the following parameters:

### (b1) Communication type

The communication type may include one or more of unicast, multicast, and broadcast. A communication type of a logical channel is a communication type applicable to the logical channel.

### (b2) Identifier of a target address

The identifier of the target address indicates the target address corresponding to the logical channel.

For example, if the communication type corresponding to the logical channel is broadcast, the identifier of the target address of the logical channel may be a service identifier (Service ID), and the service identifier may be a service ID. For another example, if the communication type corresponding to the logical channel is multicast, the identifier of the target address of the logical channel may be an L2 ID, an L1 ID, or the like corresponding to a group. For still another example, if the communication type corresponding to the logical channel is unicast, the identifier of the target address of the logical channel may be one or more of the following: the foregoing connection ID, the foregoing peer terminal device ID, the foregoing peer terminal device ID plus a service ID, or an ID of the terminal device plus the peer terminal device ID.

The ID of the terminal device may be, for example, one or more of the following: a C-RNTI, a TMSI, an IMSI, an IMEI, an L1 ID, and an L2 ID.

It should be understood that, if identifiers of target addresses corresponding to the unicast, the multicast, and the broadcast do not conflict, that is, whether the communication type is unicast, multicast, or broadcast can be determined by using the identifier of the target address, the attribute information of the logical channel may not include the communication type.

### (b3) Identifier of a transmission resource

The attribute information of each logical channel may include identifiers of one or more transmission resources. For ease of description, the attribute information is referred to as a grant list in the following. It should be understood that the transmission resource herein is a transmission resource used for the SL.

For example, the grant list is used to indicate an identifier of a transmission resource that can be used by the logical channel. For example, the grant list = {1, 2} indicates that data on the logical channel can be sent only by using a transmission resource whose index is 1 or 2, and cannot be sent by using another transmission resource. Alternatively, the grant list is used to indicate an identifier of a transmission resource that cannot be used by the logical channel. The transmission resource may be a dynamically scheduled grant, or a semi-persistent scheduling resource configured by the network device, for example, a CG grant type 1, a CG grant type 2, or SPS, or a resource obtained by the terminal device through contention, for example, a mode 2/4 grant.
(b4) Transmit power spectral density PSD/transmit power
(b5) Modulation and coding scheme MCS
(b6) Path loss PL
(b7) Quantity of transmission repetitions (Repetitions)
(b8) Quantity of PDCP duplications (Duplications)
(b9) Multi-antenna capability, which is also referred to as a MIMO capability
(b10) Sidelink channel busy ratio SL CBR
(b11) Reliability
(b12) Communication range
(b13) Reliability plus communication range

When the network device configures any one of the foregoing parameters (b4) to (b13), a configuration form of the parameter may be one or more of the following: one or more values of the parameter, one or more value ranges of the parameter, and a value threshold of the parameter.

For ease of description, when the attribute information of the logical channel includes one of the parameters (b4) to (b13), it is said that the logical channel includes a list of the parameter. For example, when the attribute information of the logical channel includes the MCS, it is said that the attribute information of the logical channel includes an MCS list. It should be understood that each value in the list may indicate a value of the parameter, a value range of the parameter, or a value threshold of the parameter.

For example, attribute information of a logical channel includes a repetition list = {1, 2}, it may indicate that data on the logical channel can be repeatedly transmitted only once or twice. Alternatively, if a repetition list = {2}, it may indicate that data on the logical channel can be repeatedly transmitted only twice or at most twice. Alternatively, if a repetition list = {2}, it may indicate that data on the logical channel can be repeatedly transmitted only twice or at least twice.

For another example, if attribute information of a logical channel includes an MCS list = {> 3}, it indicates that an MCS greater than 3 needs to be used when data on the logical channel is sent. Alternatively, if an MCS list = {≥ 3}, it indicates that an MCS greater than or equal to 3 needs to be used when data on the logical channel is sent. Alternatively, if an MCS list = {< 4}, it indicates that an MCS less than 4 needs to be used when data on the logical channel is sent. Alternatively, if an MCS list = {≤ 4}, it indicates that an MCS less than or equal to 4 needs to be used when data on the logical channel is sent. Alternatively, if an MCS list = {< 1, 5 >}, it indicates that an MCS greater than 1 and less than 5 needs to be used when data on the logical channel is sent.

It should be understood that, in this application, the MCS being a value means that an index corresponding to the MCS is the value. For example, the MCS being 1 means that the index corresponding to the MCS is 1.

For another example, if attribute information of a logical channel includes a duplication list = {> 3}, it indicates that a duplication greater than 3 needs to be used when data on the logical channel is sent. Alternatively, if a duplication list = {≥ 3}, it indicates that a duplication greater than or equal to 3 needs to be used when data on the logical channel is sent. Alternatively, if a duplication list = {< 4}, it indicates that a duplication less than 4 needs to be used when data on the logical channel is sent. Alternatively, if a duplication list = {≤ 4}, it indicates that a duplication less than or equal to 4 needs to be used when data on the logical channel is sent. Alternatively, if a duplication list = {< 1, 5 >}, it indicates that a duplication greater than 1 and less than 5 needs to be used when data on the logical channel is sent.

S203: The terminal device reports a buffer status report (buffer status report, BSR) to the network device.

The step is an optional step.

When the terminal device has a data transmission requirement, the terminal device may report, to the network device, a BSR of a logical channel corresponding to each target address, and the network device may learn, based on the BSR, an amount of to-be-sent data on the logical channel corresponding to each target address.

It should be understood that, in this application, reliability and/or communication ranges of data or QoS flows mapped to a same logical channel are the same or close.

For example, for a BSR format of the terminal device, refer to an SL BSR reporting format defined in LTE-V For details, refer to the conventional technology.

S204: The network device sends scheduling information to the terminal device. The scheduling information is used to indicate the transmission resource.

Optionally, the network device may send the scheduling information to the terminal device based on the BSR reported by the terminal device. Alternatively, the network device may determine and send the scheduling information based on a capability of the network device and the like.

Optionally, the scheduling information may further include the attribute information of the transmission resource. S205: The terminal device selects, for the transmission resource, a matched logical channel on which there is to-be-transmitted data.

It may be understood that a logical channel matching the transmission resource does not include a logical channel on which there is no to-be-transmitted data. The matched logical channel described below is the matched logical channel on which there is to-be-transmitted data. The following provides discussions based on different cases.
1. The scheduling information includes the attribute information of the transmission resource.

In this case, in S205, the terminal device may select the matched logical channel for the transmission resource based on the attribute information of the transmission resource and the attribute information of each logical channel.

For example, the attribute information of the transmission resource may include one or more of the following parameters:

### (c1) Communication type

The communication type may include one or more of unicast, multicast, and broadcast.

For example, if the attribute information of the transmission resource carries only the unicast communication type, it indicates that only a unicast connection or a logical channel corresponding to the unicast connection can match the transmission resource.

### (c2) Identifier of a target address

The attribute information of the transmission resource may include identifiers of one or more target addresses. In the following, for ease of description, the identifier of the target address in the attribute information of the transmission resource is denoted as a DST list. It should be understood that the DST list may include a service ID list, a connection ID list, and/or a group ID list.

The DST list may indicate an identifier indicating a target address corresponding to a connection that is allowed to use the transmission resource, or may indicate an identifier of a target address corresponding to a connection that is not allowed to use the transmission resource.

For example, if the DST list indicates the identifier of the target address corresponding to the connection that is allowed to use the transmission resource, in the logical channel of the terminal device, only when an identifier of a corresponding target address of a logical channel belongs to the DST list, can the logical channel match the transmission resource. For example, in the logical channel of the terminal device, only a logical channel corresponding to a unicast connection whose corresponding connection identifier belongs to the connection ID list can match the transmission resource. Similarly, in the logical channel of the terminal device, only a logical channel corresponding to a group whose corresponding group identifier belongs to the group ID list and whose communication type is multicast communication can match the transmission resource.

### (c3) Logical channel identifier

Similarly, the attribute information of the transmission resource may include one or more target logical channel identifiers. In the following, for ease of description, the logical channel identifier in the attribute information of the transmission resource is denoted as an LCH list. The LCH list may indicate a logical channel allowed to use the transmission resource, or may indicate a logical channel not allowed to use the transmission resource.
(c4) Transmit power spectral density PSD/transmit power
(c5) Modulation and coding scheme MCS
(c6) Path loss PL
(c7) Quantity of transmission repetitions (Repetitions)
(c8) Quantity of PDCP duplications (Duplications)
(c9) Multi-antenna capability, which is also referred to as a MIMO capability
(c10) Sidelink channel busy ratio SL CBR
(c11) Reliability
(c12) Communication range
(c13) Reliability plus communication range

Similar to configuring the attribute information of the logical channel by the network device, when the network device configures any one of the foregoing parameters (c5) to (c13), a configuration form of the parameter may be one or more of the following: one or more values of the parameter, one or more value ranges of the parameter, and a value threshold of the parameter.

For ease of description, when the attribute information of the transmission resource includes one of the parameters (c5) to (c13), it is said that the attribute information of the transmission resource includes a list of the parameter. For example, when the attribute information of the transmission resource includes the MCS, it is said that the attribute information of the transmission resource includes an MCS list. It should be understood that each value in the list may indicate a value of the parameter, a value range of the parameter, or a value threshold of the parameter.

For example, if the attribute information of the transmission resource includes a repetition list = {1, 2}, it may indicate that the transmission resource can be used for repeated transmission only once or twice. Alternatively, if a repetition list = {2}, it may indicate that the transmission resource may be reused for at most twice.

The terminal device may select, based on the attribute information of the transmission resource and the attribute information of each logical channel, the logical channel matching the transmission resource from the logical channel on which there is to-be-transmitted data. The following uses an example for description. For ease of description, in the following, these parameters such as the PSD/transmit power, the MCS, the PL, the repetition, the duplication, the MIMO capability, the SL CBR, the reliability, the communication range, and the reliability plus the communication range are collectively referred to as first-type parameters.

### Example 1

A quantity of parameters belonging to the first-type parameters in the attribute information of the transmission resource is the same as a quantity of parameters belonging to the first-type parameters in the attribute information of the logical channel, and a corresponding type is the same.

For example, if the attribute information of the logical channel is the communication type, the identifier of the target address, the MCS, the repetition, the duplication, and the reliability plus a distance, the attribute information of the transmission resource is also the communication type, the MCS, the repetition, the duplication, and the reliability plus a distance, or the attribute information of the transmission resource may further include either or both the logical channel identifier and the identifier of the target address.

For another example, if the attribute information of the logical channel is the communication type, the identifier of the target address, the MCS, the repetition, and the duplication, the attribute information of the transmission resource is also the communication type, the MCS, the repetition, and the duplication, or the attribute information of the transmission resource may further include either or both of the LCH list and the DST list.

For another example, if the attribute information of the logical channel is the communication type, the identifier of the target address, the MCS, and power, the attribute information of the transmission resource is also the communication type, the MCS, and the power.

In this scenario, if the attribute information of the transmission resource includes the LCH list and/or the DST list, the terminal device may first select, from the logical channel of the terminal device, a logical channel that belongs to the LCH list and/or the DST list and that matches the communication type. Then, based on a matching result between the parameter in the first-type parameters of the selected logical channels and a same-type parameter in the first-type parameters of the transmission resource, the logical channel matching the transmission resource may be determined. For example, the attribute information of the logical channel is the communication type, the identifier of the target address, and the MCS list, the attribute information of the transmission resource is the MCS list, and both the MCS lists indicate allowed MCSs. In this case, if the MCS list of the transmission resource = {1, 2, 3}, a logical channel whose MCS list includes 1, 2, or 3 is the logical channel matching the transmission resource.

For example, the attribute information of the logical channel is the communication type, the identifier of the target address, the MCS list, and a repetition list, and the attribute information of the transmission resource is a repetition list = {1, 2, 3} and an MCS list = {1, 2}. In this case, a logical channel whose MCS list includes 1 or 2 and whose repetition list includes 1, 2, or 3 is the logical channel matching the transmission resource.

For example, the attribute information of the logical channel is the communication type, the identifier of the target address, and the reliability plus the communication range, and the attribute information of the transmission resource is an LCH list = {1, 2, 3, 4, 5} and a reliability plus communication range list = {95%, 100 m; 90%, 150 m}. In this case, the terminal device may determine the matched logical channel based on reliability plus communication range lists of logical channels whose identifiers are 1, 2, 3, 4, and 5.

### Example 2

Types of parameters belonging to the first-type parameters in the attribute information of the transmission resource are not completely the same as types of parameters belonging to the first-type parameters in the attribute information of the logical channel.
(1) A quantity of the parameters belonging to the first-type parameters in the attribute information of the transmission resource is greater than a quantity of the parameters belonging to the first-type parameters in the attribute information of the logical channel.

A1: The parameter belonging to the first-type parameters in the attribute information of the transmission resource includes the parameter belonging to the first-type parameters in the attribute information of the logical channel. It should be understood that the inclusion herein refers to including a parameter type instead of a corresponding value. For example, the parameters belonging to the first-type parameters in the attribute information of the transmission resource are the MCS list and a range list, and the parameter belonging to the first-type parameters in the attribute information of the logical channel is the MCS list.

In this case, it may be considered that all the logical channels match the range list of the transmission resource.

For example, the attribute information of the logical channel is the communication type, the identifier of the target address, and the MCS list, the attribute information of the transmission resource is a range list = {1}, and an MCS list = {1, 2}, where a range whose index is 1 indicates that the communication range is greater than 100 m. In this case, a logical channel whose MCS list includes 1 or 2 matches the transmission resource.

B1: The parameter belonging to the first-type parameters in the attribute information of the transmission resource incompletely includes the parameter belonging to the first-type parameters in the attribute information of the logical channel. It should be understood that the inclusion herein refers to including a parameter type instead of a corresponding value. For example, the parameters belonging to the first-type parameters in the attribute information of the transmission resource are the MCS list, a PL list, and a range list, and the parameters belonging to the first-type parameters in the attribute information of the logical channel are the MCS list and a reliability list. For another example, the parameters belonging to the first-type parameters in the attribute information of the transmission resource are the MCS list, a PL list, and a range list, and the parameter belonging to the first-type parameters in the attribute information of the logical channel is a repetition list.

In this case, the terminal device may convert, into a same type of parameter according to a specific conversion rule, the parameter belonging to the first-type parameters in the attribute information of the transmission resource and the parameter belonging to the first-type parameters in the attribute information of the logical channel, and then perform matching. The conversion rule may be configured by the network device, defined in a protocol, or implemented by the terminal device.

For example, the network device may configure a conversion formula between the parameter in the first-type parameters and the reliability plus the communication range. In this way, the parameter belonging to the first-type parameters in the attribute information of the transmission resource and the parameter belonging to the first-type parameters in the attribute information of the logical channel are finally converted to reliability plus communication ranges.

If the reliability obtained through conversion is not equal, and the communication ranges are also not equal, the reliability can be uniformly converted into reliability within a same communication range according to a specific formula. For example, (99%, 50 m) = (98%; 100 m) or (99%; 50 m) = (90%; 300 m) is defined.

(2) A quantity of the parameters belonging to the first-type parameters in the attribute information of the transmission resource is less than a quantity of the parameters belonging to the first-type parameters in the attribute information of the logical channel.

A2: The parameter belonging to the first-type parameters in the attribute information of the logical channel includes the parameter belonging to the first-type parameters in the attribute information of the transmission resource. It should be understood that the inclusion herein refers to including a parameter type instead of a corresponding value. For example, the parameter belonging to the first-type parameters in the attribute information of the transmission resource is the MCS list, and the parameters belonging to the first-type parameters in the attribute information of the logical channel are the MCS list and a range list.

In this case, if the attribute information of the logical channel does not include another parameter, for example, the identifier of the transmission resource, and the attribute information of the transmission resource also does not include another parameter, for example, the LCH list, it is considered that the transmission resource is applicable to all the logical channels.

B2: The parameter belonging to the first-type parameters in the attribute information of the logical channel incompletely includes the parameter belonging to the first-type parameters in the attribute information of the transmission resource. For example, the parameters belonging to the first-type parameters in the attribute information of the transmission resource are the MCS list and a PL list, and the parameters belonging to the first-type parameters in the attribute information of the logical channel are the MCS list, a reliability list, and a range list.

In this case, the processing manner is the same as the manner in B1.

(3) A quantity of the parameters belonging to the first-type parameters in the attribute information of the transmission resource is equal to a quantity of the parameters belonging to the first-type parameters in the attribute information of the logical channel, and parameter types are incompletely the same.

For example, the parameter belonging to the first-type parameters in the attribute information of the logical channel is a PL list, and the parameter belonging to the first-type parameters in the transmission resource is the MCS list. For another example, the parameters belonging to the first-type parameters in the attribute information of the logical channel are a PL list and a reliability list, and the parameter belonging to the first-type parameters in the transmission resource is the MCS list.

In this case, the processing manner is the same as the manner in B1.

For example, a conversion formula between the reliability plus the communication range and the first-type parameters may be: {(PSD = 20 + MCS = 10 + PL = 10) + (SL CBR = 30%) + (MIMO = flow + duplication = 2 + repetition = 4)} = {99%; 100 m}.

2. The scheduling information does not include the attribute information of the transmission resource.

In this case, if the attribute information of the logical channel includes the grant list, the logical channel matching the transmission resource may be determined based on an identifier of a transmission resource currently scheduled by the network device and the grant list. If the attribute information of the logical channel does not include the grant list, it may be considered that all the logical channels on which there is to-be-sent data match the transmission resource.

S206: The terminal device determines a first logical channel.

### Manner 1

For the first case, that is, the scheduling information includes the attribute information of the transmission resource, or for the case in which the attribute information of the logical channel includes the grant list, the first logical channel may be a logical channel that has a highest priority in all the matched logical channels, or the first logical channel may be a logical channel that has a highest priority in all the matched logical channels and on which there is an amount of remaining transmittable data (for example, Bj > 0).

It should be noted that the logical channel with the highest priority in this specification may be replaced with the logical channel that has the highest priority and on which there is an amount of remaining transmittable data (for example, Bj > 0). Details are not described in the following one by one.

In addition, in this application, Bj of a logical channel group is equal to a sum of Bj of all logical channels in the logical channel group. A priority of the logical channel group is a priority of a logical channel that has a highest priority in the logical channel group and on which there is to-be-transmitted data, or a priority of the logical channel group is a priority of a logical channel that has a highest priority in the logical channel group, on which there is to-be-transmitted data, and on which there is an amount of remaining transmittable data (for example, Bj > 0).

An example of a token bucket mechanism on the Uu is as follows.

Step 0: An available data amount Bj (corresponding to an LCH j) maintained by each LCH is initialized to 0, and a prioritized bit rate (Prioritized Bit Rate, PBR) is added to each TTI, where Bj cannot exceed a bucket size. A base station configures a PBR and a BSD value of each LCH for each LCH of UE.

Step 1: Packaging is performed on all LCHs whose Bj > 0 in descending order of priorities. Bj cannot be greater than the bucket size. Otherwise, an maximum amount of to-be-transmitted data is the bucket size equal to PBR x BSD (Bucket Size Duration).

Note: When a PBR is infinite, a logical channel with a priority lower than that of an LCH is considered only after data on the LCH is transmitted.

Step 2: A size of the data packet in step 1 is subtracted from Bj.

Step 3: If there is still a UL grant after the first two steps are performed, remaining data is packaged based on LCH priorities regardless of Bj.

### Manner 2

For the second case 2, that is, the scheduling information does not include the attribute information of the transmission resource, or only for the case in which the attribute information of the logical channel does not include the grant list, the first logical channel may be a logical channel on which there is to-be-transmitted data and that has a highest logical channel priority in all the logical channels of the terminal device. In a specific implementation, for example, a step of determining the first logical channel may include: The terminal device uses, as a corresponding priority of the target address, a priority of a logical channel that has a highest priority in logical channels corresponding to the target address; then, compares priorities of target addresses to determine a target address that has a highest priority; and then uses, as the first logical channel, a logical channel on which there is to-be-transmitted data and that has a highest logical channel priority in logical channels corresponding to the target address that has the highest priority.

S207: The terminal device allocates a transmission resource in the transmission resources to the first logical channel. S208. The terminal device determines one or more second logical channels if there is a remaining transmission resource.

To be specific, the terminal device adds the data on the first logical channel to the transmission resources, and if there is a remaining transmission resource after the data on the first logical channel is completely carried, the terminal device determines the one or more second logical channels.

Optionally, for Manner 1 in S206, the second logical channel is a logical channel in all the matched logical channels that corresponds to a same target address as the first logical channel.

Further, the second logical channel may be a logical channel in the matched logical channel that corresponds to the same target address as the first logical channel and whose reliability plus a communication range is close to reliability plus a communication range of the first logical channel.

For example, the network device may configure that (99%; 50 m) is close to (90%; 350 m). In this case, if the reliability plus the communication range of the first logical channel is equal to (99%; 50 m), and reliability plus a communication range of a logical channel whose identifier is 1 in the matched logical channel is equal to (90%; 350 m), the terminal device may determine the logical channel whose identifier is 1 as the second logical channel.

Optionally, for Manner 2 in S206, the second logical channel may be a logical channel selected by the terminal device based on attribute information of the first logical channel from a logical channel corresponding to a target address corresponding to the first logical channel.

For example, the terminal device may use the attribute information of the first logical channel as the attribute information of the transmission resource, and then select, based on the attribute information of the transmission resource, the matched logical channel for the transmission resource from the logical channel corresponding to the target address corresponding to the first logical channel.

It should be understood that, for how to select, based on the attribute information of the first logical channel, the logical channel from the logical channel corresponding to the target address corresponding to the first logical channel, refer to the description provided for selecting the matched logical channel for the transmission resource from the logical channel of the terminal device based on the attribute information of the transmission resource in S205. Details are not described herein again.

Optionally, for Manner 2 in S206, if the parameter belonging to the first-type parameters in the attribute information of each logical channel is the reliability plus the communication range, and the network device preconfigures a conversion relationship, the terminal device may determine the second logical channel based on reliability plus a communication range of the logical channel corresponding to the target address corresponding to the first logical channel.

For example, the network device configures (99%; 50 m) = (90%; 300 m). Reliability plus a communication range of the first logical channel is equal to (99%; 50 m), and reliability plus a communication range of a logical channel whose identifier is 3 is equal to (90%; 300 m). In this case, the terminal device may determine the logical channel whose identifier is 3 as the second logical channel.

Optionally, the network device may also configure a multiplexable logical channel.

For example, the attribute information of the logical channel may further include a multiplexable LCH list. In this case, the first logical channel may determine multiplexable logical channels, namely, the one or more second logical channels, based on a multiplexable LCH list of the first logical channel. For example, a multiplexable LCH list = {1, 2, 3} in the attribute information of the first logical channel indicates that logical channels whose identifiers are 1, 2, and 3 may be multiplexed with the first logical channel. To be specific, if the first logical channel may use the transmission resource, the logical channels whose the identifiers are 1, 2, and 3 may also use the transmission resource. For another example, the attribute information of the logical channel may further include a multiplexable PQI/QFI/PQI list/QFG list. In this case, the terminal device may determine a multiplexable QoS flow based on these parameters, and further can determine the multiplexable logical channel.

For another example, the attribute information of the transmission resource may include a multiplexable LCH list. In this case, the terminal device may determine, as the second logical channel, a logical channel indicated by the LCH list.

S209: The terminal device allocates transmission resources in the transmission resources to some or all of the one or more second logical channels. In a manner, the terminal device may sequentially allocate the transmission resources to the second logical channels in descending order of priorities of the one or more second logical channels determined in S208.

In another manner, the terminal device may allocate the transmission resources to the second logical channels with reference to a Uu interface logical channel multiplexing manner and based on rate requirements of the one or more second logical channels determined in S208.

S210: The terminal device determines a sending parameter.

S211: The terminal device sends, by using the sending parameter, data carried on the transmission resource.

For example, the terminal device may determine the sending parameter based on reliability and/or a communication range of a third logical channel.

For example, the third logical channel may be a logical channel that has a highest reliability and/or communication range requirement in a logical channel corresponding to the data carried on the transmission resource. Alternatively, the third logical channel is the first logical channel.

The sending parameter may include, for example, all or some of the parameters in the first-type parameters.

For example, the sending parameter may include an MCS. In this case, if attribute information of the third logical channel includes an MCS allowed to be used by the third logical channel, the MCS may be directly used. If attribute information of the third logical channel does not include an MCS allowed to be used by the third logical channel, the terminal device may determine the MCS based on another parameter in the attribute information of the third logical channel. For example, the network device may configure or a protocol may define a conversion relationship between the MCS and some parameters in the attribute information of the logical channel, for example, {(PSD = 20 + MCS = 10 + PL = 10) + (SL CBR = 30%) + (MIMO = flow + duplication = 2 + repetition = 4)} = {99%; 100 m}. In this case, the terminal device may determine the MCS according to on the conversion formula.

Optionally, the sending parameter may further include a PL.

For example, in a manner, a physical layer of the terminal device may determine the sending parameter, for example, the MCS. In another manner, an MCS layer of the terminal device may determine the sending parameter. After determining the sending parameter, the MAC layer sends indication information to a physical layer. The indication information is used to indicate the sending parameter. The physical layer may determine the sending parameter based on the indication information, so that the data carried on the transmission resource may be sent based on the sending parameter.

According to the method provided in this application, the network device may configure the attribute information of the logical channel of the terminal device, the attribute information of the logical channel may determine the reliability and/or the communication range of the logical channel, and data that is the same as or close to the reliability and/or the communication range of the logical channel is mapped to the logical channel, to ensure reliability and/or a communication range of data transmission. In addition, the network device may further configure the attribute information of the scheduled transmission resource, so that the terminal device may select the matched logical channel for the transmission resource based on the attribute information of the logical channel and the attribute information of the transmission resource. This can ensure the reliability and/or the communication range of transmission.

The transmission resource described above is scheduled by the network device. Actually, the terminal device may alternatively independently contend for the transmission resource or use a reserved transmission resource. In this scenario, the attribute information of the logical channel of the terminal device may be the reliability and/or the communication range, and both the resource that the terminal device can contend for and the reserved transmission resource may also have specific attribute information, for example, an MCS, a quantity of transmission repetitions, and a quantity of PDCP duplications. The terminal device may contend for or reserve, based on a predefined or preconfigured mapping relationship between the attribute information of the transmission resource and the attribute information of the logical channel, a resource that matches attribute information of a logical channel corresponding to to-be-transmitted data.

For example, the network device may preconfigure the following correspondence {99%, 100 m; an MCS = 10, a quantity of transmission repetitions = 2, a quantity of PDCP duplications = 1}. In this case, the terminal device may determine a corresponding MCS, a corresponding quantity of transmission repetitions, and a corresponding quantity of PDCP duplications based on reliability plus a communication range of the logical channel corresponding to the to-be-transmitted data. Then, the terminal device contends for or reserves the corresponding MCS, the corresponding quantity of transmission repetitions, and the corresponding quantity of PDCP duplications and a transmission resource that match the MCS, the quantity of transmission repetitions, and the quantity of PDCP duplications that are determined by the terminal device.

According to the method, the terminal device may obtain the transmission resource that matches the attribute information of the logical channel, so that the to-be-transmitted data can be transmitted on the transmission resource. This ensures reliability and/or a communication range of the data.

It should be understood that the foregoing content is specific to an SL scenario. To be specific, the foregoing parameters, a matching manner of the logical channel, a multiplexing manner, and the like are all specific to the SL. For example, the logical channel is an SL logical channel, and the transmission resource is an SL transmission resource. In addition, the solutions in this application are also applicable to data transmission through the Uu interface. In this scenario, the attribute information of the logical channel does not include (b1), (b2), and (b10), and attribute information of the transmission resource of the Uu interface does not include (c1), (c2), and (c10). A manner of matching the logical channel of the Uu interface with the transmission resource and a manner of multiplexing the logical channel are similar to the foregoing manner of matching the SL logical channel with the transmission resource and the foregoing manner of multiplexing the logical channel. For details, refer to the foregoing description. Details are not described herein again.

It should be understood that, in the foregoing embodiments, the terminal device and/or the network device may perform some or all of the steps in embodiments. These steps or operations are merely examples. Other operations or variations of various operations may further be performed in embodiments of this application. In addition, the steps may be performed in a sequence different from a sequence presented in embodiments, and not all the operations in embodiments are necessarily performed. Sequence numbers of the steps do not mean execution sequences in embodiments of this application. The execution sequences of the processes should be determined according to functions and internal logic of the processes, and should not be construed as any limitation on the implementation processes of embodiments of this application.

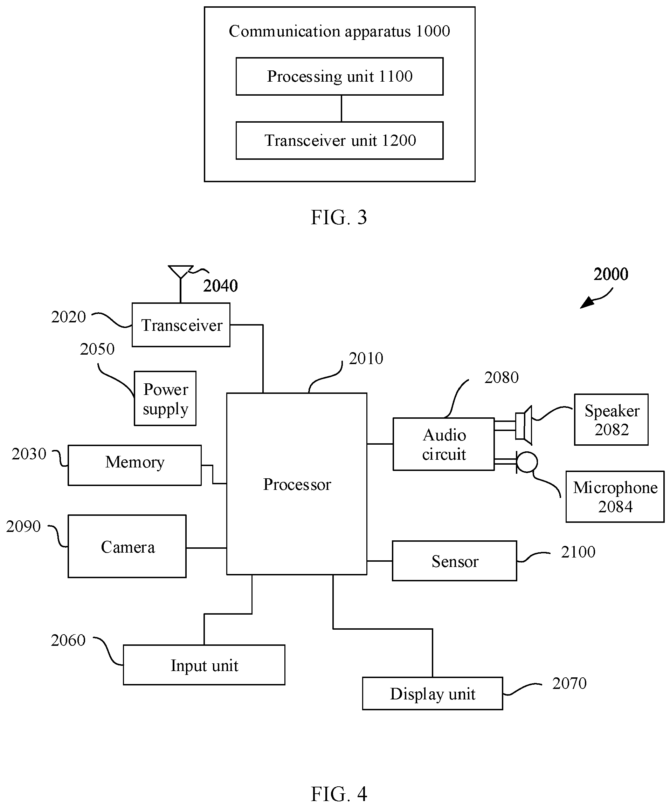

FIG. 3 is a schematic block diagram of a communication apparatus according to an embodiment of this application. As shown in FIG. 3, the communication apparatus 1000 may include a processing unit 1100 and a transceiver unit 1200.

In a possible design, the communication apparatus 1000 may correspond to the terminal device in the foregoing method embodiments, for example, may be a terminal device or a component (for example, a circuit or a chip) configured in a terminal device.

It should be understood that the communication apparatus 1000 may correspond to the terminal device in the method 200 in embodiments of this application, and the communication apparatus 1000 may include a unit configured to perform the method performed by the device in the method 200 in FIG. 2. In addition, the units in the communication apparatus 1000 and the foregoing other operations and/or functions are respectively for implementing corresponding procedures of the method 200 in FIG. 2.

It should further be understood that, when the communication apparatus 1000 is a terminal device, the transceiver unit 1200 in the communication apparatus 1000 may be implemented by a transceiver, for example, may correspond to a transceiver 2020 in a terminal device 2000 shown in FIG. 4, and the processing unit 1100 in the communication apparatus 1000 may be implemented by at least one processor, for example, may correspond to a processor 2010 in the terminal device 2000 shown in FIG. 4.

It should further be understood that, when the communication apparatus 1000 is a chip configured in a terminal device, the transceiver unit 1200 in the communication apparatus 1000 may be implemented by an input/output interface. In another possible design, the communication apparatus 1000 may correspond to the network device in the foregoing method embodiments, for example, may be a network device or a component (for example, a circuit or a chip) configured in a network device.

The communication apparatus 1000 may correspond to the network device in the method 200 in embodiments of this application, and the communication apparatus 1000 may include a unit configured to perform the method performed by the network device in the method 200 in FIG. 2. In addition, the units in the communication apparatus 1000 and the foregoing other operations and/or functions are respectively for implementing corresponding procedures of the method 200 in FIG. 2.

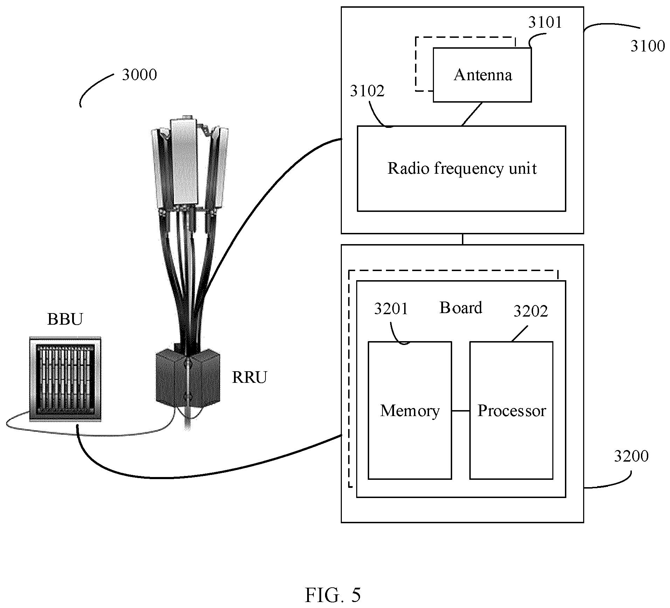

It should further be understood that, when the communication apparatus 1000 is a network device, the transceiver unit in the communication apparatus 1000 may be implemented by a transceiver, for example, may correspond to a transceiver 3100 in a network device 3000 shown in FIG. 5, and the processing unit 1100 in the communication apparatus 1000 may be implemented by at least one processor, for example, may correspond to the processor 3202 in the network device 3000 shown in FIG. 5.

It should further be understood that, when the communication apparatus 1000 is a chip configured in a network device, the transceiver unit 1200 in the communication apparatus 1000 may be implemented by an input/output interface.

FIG. 4 is a schematic diagram of a structure of the terminal device 2000 according to an embodiment of this application. The terminal device 2000 may be used in the system shown in FIG. 1, to perform a function of the terminal device in the foregoing method embodiments. As shown in the figure, the terminal device 2000 includes the processor 2010 and the transceiver 2020. Optionally, the terminal device 2000 further includes a memory 2030. The processor 2010, the transceiver 2020, and the memory 2030 may communicate with each other through an internal connection path, to transfer a control signal and/or a data signal. The memory 2030 is configured to store a computer program. The processor 2010 is configured to invoke the computer program from the memory 2030 and run the computer program, to control the transceiver 2020 to send and receive a signal. Optionally, the terminal device 2000 may further include an antenna 2040, configured to send, by using a radio signal, uplink data or uplink control signaling output by the transceiver 2020.

The processor 2010 and the memory 2030 may be integrated into one processing apparatus. The processor 2010 is configured to execute program code stored in the memory 2030, to implement the foregoing functions. In a specific implementation, the memory 2030 may alternatively be integrated into the processor 2010, or may be independent of the processor 2010. The processor 2010 may correspond to the processing unit in FIG. 3.

The transceiver 2020 may correspond to the transceiver unit in FIG. 3, and may also be referred to as a transceiver unit. The transceiver 2020 may include a receiver (which is also referred to as a receiver machine or a receiver circuit) and a transmitter (which is also referred to as a transmitter machine or a transmitter circuit). The receiver is configured to receive a signal, and the transmitter is configured to transmit a signal.

It should be understood that the terminal device 2000 shown in FIG. 4 can implement each process related to the terminal device in the method embodiment shown in FIG. 2. Operations and/or functions of the modules in the terminal device 2000 are respectively implementing corresponding procedures in the foregoing method embodiments. For details, refer to the descriptions in the foregoing method embodiments. To avoid repetition, detailed descriptions are appropriately omitted herein.

The processor 2010 may be configured to perform an action that is implemented inside the terminal device and that is described in the foregoing method embodiments, and the transceiver 2020 may be configured to perform an action of sending or receiving that is performed by the terminal device to or from the network device and that is described in the foregoing method embodiments. For details, refer to the descriptions in the foregoing method embodiments. Details are not described herein again.

Optionally, the terminal device 2000 may further include a power supply 2050, configured to supply power to various components or circuits in the terminal device.

In addition, to improve a function of the terminal device, the terminal device 2000 may further include one or more of an input unit 2060, a display unit 2070, an audio circuit 2080, a camera 2090, a sensor 2100, and the like, and the audio circuit may further include a speaker 2082, a microphone 2084, and the like.

FIG. 5 is a schematic diagram of a structure of a network device according to an embodiment of this application, for example, may be a schematic diagram of a structure of a base station. The base station 3000 may be used in the system shown in FIG. 1, to perform a function of the network device in the foregoing method embodiments. As shown in the figure, the base station 3000 may include one or more radio frequency units, for example, a remote radio unit (remote radio unit, RRU) 3100, and one or more baseband units (BBUs) (which may also be referred to as distributed units (DUs)) 3200. The RRU 3100 may be referred to as a transceiver unit, and corresponds to the transceiver unit 1200 in FIG. 3. Optionally, the transceiver unit 3100 may also be referred to as a transceiver machine, a transceiver circuit, a transceiver, or the like, and may include at least one antenna 3101 and a radio frequency unit 3102. Optionally, the transceiver unit 3100 may include a receiving unit and a sending unit. The receiving unit may correspond to a receiver (which may also be referred to as a receiver machine or a receiver circuit), and the sending unit may correspond to a transmitter (which may also be referred to as a transmitter machine or a transmitter circuit). The RRU 3100 is mainly configured to: receive and send a radio frequency signal, and perform conversion between the radio frequency signal and a baseband signal, for example, is configured to send indication information to a terminal device. The BBU 3200 is mainly configured to: perform baseband processing, control a base station, and the like. The RRU 3100 and the BBU 3200 may be physically disposed together, or may be physically disposed separately, that is, in a distributed base station.

The BBU 3200 is a control center of the base station, may also be referred to as a processing unit, may correspond to the processing unit 1100 in FIG. 3, and is mainly configured to implement a baseband processing function, for example, channel encoding, multiplexing, modulation, or frequency spread. For example, the BBU (the processing unit) may be configured to control the base station to perform an operation procedure related to the network device in the foregoing method embodiments, for example, generate the foregoing indication information.

In an example, the BBU 3200 may include one or more boards. A plurality of boards may jointly support a radio access network (for example, an LTE network) having a single access standard, or may separately support radio access networks (for example, an LTE network, a 5G network, or another network) having different access standards. The BBU 3200 further includes a memory 3201 and a processor 3202. The memory 3201 is configured to store necessary instructions and data. The processor 3202 is configured to control the base station to perform a necessary action, for example, is configured to control the base station to perform the operation procedure related to the network device in the foregoing method embodiments. The memory 3201 and the processor 3202 may serve one or more boards. In other words, a memory and a processor may be independently disposed on each board, or a plurality of boards may share a same memory and a same processor. In addition, a necessary circuit may further be disposed on each board. It should be understood that the base station 3000 shown in FIG. 5 can implement each process of the network device in the method embodiment in FIG. 2. Operations and/or functions of the modules in the base station 3000 are separately implementing corresponding procedures in the foregoing method embodiments. For details, refer to the descriptions in the foregoing method embodiments. To avoid repetition, detailed descriptions are appropriately omitted herein. The BBU 3200 may be configured to perform an action implemented inside the network device in the foregoing method embodiments, and the RRU 3100 may be configured to perform an action of sending or receiving that is performed by the network device to or from the terminal device and that is described in the foregoing method embodiments. For details, refer to the descriptions in the foregoing method embodiments. Details are not described herein again.

It should be understood that the base station 3000 shown in FIG. 5 is merely a possible architecture of the network device, and should not constitute any limitation on this application. The method provided in this application is applicable to a network device having another architecture, for example, a network device including a CU, a DU, and an AAU. A specific architecture of the network device is not limited in this application.

An embodiment of this application further provides a processing apparatus, including a processor and an interface. The processor is configured to perform the method in any one of the foregoing method embodiments.

It should be understood that the processing apparatus may be one or more chips. For example, the processing apparatus may be a field programmable gate array (field programmable gate array, FPGA), an application-specific integrated circuit (application specific integrated circuit, ASIC), a system on a chip (system on a chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, steps in the foregoing methods may be implemented by using a hardware integrated logical circuit in the processor or by using instructions in a form of software. The steps in the methods disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps in the foregoing methods in combination with the hardware of the processor. To avoid repetition, details are not described herein again. It should be noted that the processor in embodiments of this application may be an integrated circuit chip, and has a signal processing capability. In an implementation process, steps in the foregoing method embodiments may be implemented by using a hardware integrated logic circuit in the processor or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor.

It may be understood that, in embodiments of this application, the memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories in the systems and methods described in this specification include but are not limited to these memories and any memory of another suitable type. According to the method provided in embodiments of this application, this application further provides a computer program product. The computer program product includes computer program code. When the computer program code is run on a computer, the computer is enabled to perform the method in the embodiment shown in FIG. 2.

According to the method provided in embodiments of this application, this application further provides a computer-readable medium. The computer-readable medium stores program code. When the program code is run on a computer, the computer is enabled to perform the method in the embodiment shown in FIG. 2.

According to the method provided in embodiments of this application, this application further provides a system. The system includes the foregoing one or more terminal devices and the foregoing one or more network devices.

The network device and the terminal device in the foregoing apparatus embodiments completely correspond to the network device or the terminal device in the method embodiments. A corresponding module or unit performs a corresponding step. For example, a communication unit (a transceiver) performs a receiving or sending step in the method embodiments, and a step other than the sending step and the receiving step may be performed by a processing unit (a processor). For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, an execution thread, a program, and/or a computer. As shown in the figures, both a computing device and an application that runs on the computing device may be components. One or more components may reside in a process and/or an execution thread, and the component may be located on one computer and/or distributed between two or more computers. In addition, these components may be executed from various computer-readable media that store various data structures. The components may communicate with each other by using a local and/or remote process and based on, for example, a signal having one or more data packets (for example, data from two components interacting with another component in a local system, a distributed system, and/or across a network, for example, the Internet interacting with another system by using a signal).

A person of ordinary skill in the art may be aware that various illustrative logical blocks (illustrative logical blocks) and steps (steps) that are described with reference to embodiments disclosed in this specification may be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic, mechanical, or another form.

The units described as separate parts may or may not be physically separate, and parts displayed as units may or may not be physical units, and may be located in one position, or may be distributed on a plurality of network units. Some or all of the units may be selected based on an actual requirement to achieve the objectives of the solutions in embodiments.

In addition, function units in embodiments of this application may be integrated into one processing unit, or each of the units may exist alone physically, or two or more units may be integrated into one unit.

In the foregoing embodiments, all or some of the functions of the function units may be implemented by software, hardware, firmware, or any combination thereof. When software is used to implement the functions, all or some of the functions may be implemented in a form of a computer program product. The computer program product includes one or more computer instructions (programs). When the computer instructions (programs) are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, configuration information sent by a network device, wherein the configuration information comprises attribute information of each logical channel, and the attribute information of the logical channel is used to indicate reliability and/or a communication range of the logical channel;
receiving, by the terminal device, scheduling information sent by the network device, wherein the scheduling information is used to indicate a transmission resource of the sidelink, the scheduling information further comprises attribute information of the transmission resource, and the attribute information of the transmission resource is used to indicate reliability and/or a communication range corresponding to the transmission resource; and
selecting, by the terminal device, a matched logical channel for the transmission resource based on the attribute information of the transmission resource and the attribute information of each logical channel.

2. The method according to claim 1, wherein the logical channel is a logical channel of a sidelink, and the sidelink is a direct wireless communication link between the terminal device and another terminal device.

3. The method according to claim 1 or 2, wherein the attribute information of the logical channel comprises one or more of the following:
a communication type, an identifier of a target address corresponding to the logical channel, an identifier of a transmission resource, a transmit power spectral density, a path loss, a modulation and coding scheme, a multi-antenna capability, a quantity of transmission repetitions, a quantity of packet data convergence protocol, PDCP duplications, a sidelink channel busy ratio, reliability, a communication range, or reliability plus a communication range, wherein the communication type comprises at least one of multicast, broadcast, and unicast.

4. The method according to any one of claims 1 to 3, wherein the attribute information of the transmission resource comprises one or more of the following:
a communication type, an identifier of a target address, an identifier of the logical channel, a transmit power spectral density, a path loss, a modulation and coding scheme, a multi-antenna capability, a quantity of transmission repetitions, a quantity of packet data convergence protocol PDCP duplications, a sidelink channel busy ratio, reliability, a communication range, or reliability plus a communication range, wherein the communication type comprises at least one of multicast, broadcast, and unicast.

5. A communication method, comprising:
generating, by a network device, configuration information; and
sending, by the network device, the configuration information to a terminal device, wherein
the configuration information comprises attribute information of each logical channel of the terminal device, and the attribute information of the logical channel is used to indicate reliability and/or a communication range of the logical channel; and
sending, by the network device, scheduling information to the terminal device, wherein the scheduling information is used to indicate a transmission resource of the sidelink, the scheduling information further comprises attribute information of the transmission resource, the attribute information of the transmission resource is used to indicate reliability and/or a communication range corresponding to the transmission resource, and the scheduling information is used by the terminal device to select a matched logical channel for the transmission resource.

6. The method according to claim 5, wherein the logical channel is a logical channel of a sidelink, and the sidelink is a direct wireless communication link between the terminal device and another terminal device.

7. The method according to claim 5 or 6, wherein the attribute information of the logical channel comprises one or more of the following:
a communication type, an identifier of a target address corresponding to the logical channel, an identifier of a transmission resource, a transmit power spectral density, a path loss, a modulation and coding scheme, a multi-antenna capability, a quantity of transmission repetitions, a quantity of packet data convergence protocol, PDCP duplications, a sidelink channel busy ratio, reliability, a communication range, or reliability plus a communication range, wherein the communication type comprises at least one of multicast, broadcast, and unicast.

8. A communication apparatus, wherein the apparatus is configured to perform the method according to any one of claims 1 to 4.

9. A communication apparatus, wherein the apparatus is configured to perform the method according to any one of claims 5 to 7.

10. An apparatus, comprising a processor, wherein the processor is coupled to a memory, the memory is configured to store a program or instructions, and when the program or the instructions are executed by the processor, the apparatus is enabled to perform the method according to any one of claims 1 to 4.

11. An apparatus, comprising a processor, wherein the processor is coupled to a memory, the memory is configured to store a program or instructions, and when the program or the instructions are executed by the processor, the apparatus is enabled to perform the method according to any one of claims 5 to 7.

12. A computer-readable medium, wherein the readable storage medium stores a computer program or instructions, and when the computer program or the instructions are executed, a computer is enabled to perform the method according to any one of claims 1 to 7.

13. A communication system, comprising the apparatus according to claim 8 and/or the apparatus according to claim 9.

## Patentansprüche

1. Kommunikationsverfahren, das umfasst:
Empfangen, durch ein Endgerät, von Konfigurationsinformationen, die durch eine Netzwerkvorrichtung gesendet werden, wobei die Konfigurationsinformationen Attributinformationen jedes logischen Kanals umfassen und die Attributinformationen des logischen Kanals verwendet werden, um eine Zuverlässigkeit und/oder eine Kommunikationsreichweite des logischen Kanals anzuzeigen;
Empfangen, durch das Endgerät, von Planungsinformationen, die durch die Netzwerkvorrichtung gesendet werden, wobei die Planungsinformationen verwendet werden, um eine Übertragungsressource des Sidelinks anzuzeigen, die Planungsinformationen ferner Attributinformationen der Übertragungsressource umfassen und die Attributinformationen der Übertragungsressource verwendet werden, um die Zuverlässigkeit und/oder eine Kommunikationsreichweite, die der Übertragungsressource entspricht, anzuzeigen; und
Auswählen, durch das Endgerät, eines passenden logischen Kanals für die Übertragungsressource basierend auf den Attributinformationen der Übertragungsressource und den Attributinformationen jedes logischen Kanals.

2. Verfahren nach Anspruch 1, wobei der logische Kanal ein logischer Kanal eines Sidelinks ist und der Sidelink eine direkte Drahtloskommunikationsverbindung zwischen dem Endgerät und einem anderen Endgerät ist.

3. Verfahren nach Anspruch 1 oder 2, wobei die Attributinformationen des logischen Kanals eines oder mehrere der Folgenden umfassen:
eine Kommunikationsart, eine Kennung einer Zieladresse, die dem logischen Kanal entspricht, eine Kennung einer Übertragungsressource, eine spektrale Übertragungsleistungsdichte, einen Pfadverlust, ein Modulations- und Codierungsschema, eine Mehrantennenfähigkeit, eine Anzahl von Übertragungswiederholungen, eine Anzahl von Paketdatenkonvergenzprotokoll(PDCP)-Duplizierungen, ein Sidelink-Kanalbelegungsverhältnis, Zuverlässigkeit, eine Kommunikationsreichweite oder Zuverlässigkeit plus eine Kommunikationsreichweite, wobei die Kommunikationsart mindestens eines von Multicast, Broadcast und Unicast umfasst.

4. Verfahren nach einem der Ansprüche 1 bis 3, wobei die Attributinformationen der Übertragungsressource eines oder mehrere der Folgenden umfassen:
eine Kommunikationsart, eine Kennung einer Zieladresse, eine Kennung des logischen Kanals, eine spektrale Übertragungsleistungsdichte, einen Pfadverlust, ein Modulations- und Codierungsschema, eine Mehrantennenfähigkeit, eine Anzahl von Übertragungswiederholungen, eine Anzahl von Paketdatenkonvergenzprotokoll(PDCP)-Duplizierungen, ein Sidelink-Kanalbelegungsverhältnis, Zuverlässigkeit, eine Kommunikationsreichweite oder Zuverlässigkeit plus eine Kommunikationsreichweite, wobei die Kommunikationsart mindestens eines von Multicast, Broadcast und Unicast umfasst.

5. Kommunikationsverfahren, das umfasst:
Erzeugen, durch eine Netzwerkvorrichtung, von Konfigurationsinformationen; und
Senden, durch die Netzwerkvorrichtung, der Konfigurationsinformationen an ein Endgerät, wobei
die Konfigurationsinformationen Attributinformationen zu jedem logischen Kanal des Endgeräts umfassen und die Attributinformationen des logischen Kanals verwendet werden, um die Zuverlässigkeit und/oder eine Kommunikationsreichweite des logischen Kanals anzuzeigen; und
Senden, durch die Netzwerkvorrichtung, von Planungsinformationen an das Endgerät, wobei die Planungsinformationen verwendet werden, um eine Übertragungsressource des Sidelinks anzuzeigen, die Planungsinformationen ferner Attributinformationen der Übertragungsressource umfassen, die Attributinformationen der Übertragungsressource verwendet werden, um die Zuverlässigkeit und/oder eine Kommunikationsreichweite, die der Übertragungsressource entspricht, anzuzeigen, und die Planungsinformationen durch das Endgerät verwendet werden, um einen passenden logischen Kanal für die Übertragungsressource auszuwählen.

6. Verfahren nach Anspruch 5, wobei der logische Kanal ein logischer Kanal eines Sidelinks ist und der Sidelink eine direkte Drahtloskommunikationsverbindung zwischen dem Endgerät und einem anderen Endgerät ist.

7. Verfahren nach Anspruch 5 oder 6, wobei die Attributinformationen des logischen Kanals eines oder mehrere der Folgenden umfassen:
eine Kommunikationsart, eine Kennung einer Zieladresse, die dem logischen Kanal entspricht, eine Kennung einer Übertragungsressource, eine spektrale Übertragungsleistungsdichte, einen Pfadverlust, ein Modulations- und Codierungsschema, eine Mehrantennenfähigkeit, eine Anzahl von Übertragungswiederholungen, eine Anzahl von Paketdatenkonvergenzprotokoll(PDCP)-Duplizierungen, ein Sidelink-Kanalbelegungsverhältnis, Zuverlässigkeit, eine Kommunikationsreichweite oder Zuverlässigkeit plus eine Kommunikationsreichweite, wobei die Kommunikationsart mindestens eines von Multicast, Broadcast und Unicast umfasst.

8. Kommunikationseinrichtung, wobei die Einrichtung konfiguriert ist, um das Verfahren nach einem der Ansprüche 1 bis 4 durchzuführen.

9. Kommunikationseinrichtung, wobei die Einrichtung konfiguriert ist, um das Verfahren nach einem der Ansprüche 5 bis 7 durchzuführen.

10. Einrichtung, die einen Prozessor umfasst, wobei der Prozessor mit einem Speicher gekoppelt ist, wobei der Speicher konfiguriert ist, um ein Programm oder Anweisungen zu speichern, und wenn das Programm oder die Anweisungen durch den Prozessor ausgeführt werden, es der Einrichtung ermöglicht ist, das Verfahren nach einem der Ansprüche 1 bis 4 durchzuführen.

11. Einrichtung, die einen Prozessor umfasst, wobei der Prozessor mit einem Speicher gekoppelt ist, wobei der Speicher konfiguriert ist, um ein Programm oder Anweisungen zu speichern, und wenn das Programm oder die Anweisungen durch den Prozessor ausgeführt werden, es der Einrichtung ermöglicht ist, das Verfahren nach einem der Ansprüche 5 bis 7 durchzuführen.

12. Computerlesbares Medium, wobei das lesbare Speicherungsmedium ein Computerprogramm oder Anweisungen speichert, und wenn das Computerprogramm oder die Anweisungen ausgeführt werden, es einem Computer ermöglicht ist, das Verfahren nach einem der Ansprüche 1 bis 7 durchzuführen.

13. Kommunikationssystem, das die Einrichtung nach Anspruch 8 und/oder die Einrichtung nach Anspruch 9 umfasst.

## Revendications

1. Procédé de communication, comprenant :
la réception, par un dispositif terminal, d'informations de configuration envoyées par un dispositif de réseau, dans lequel les informations de configuration comprennent des informations d'attribut de chaque canal logique, et les informations d'attribut du canal logique sont utilisées pour indiquer une fiabilité et/ou une portée de communication du canal logique ;
la réception, par le dispositif terminal, d'informations de programmation envoyées par le dispositif de réseau, dans lequel les informations de programmation sont utilisées pour indiquer une ressource de transmission de la liaison latérale, les informations de programmation comprennent en outre des informations d'attribut de la ressource de transmission, et les informations d'attribut de la ressource de transmission sont utilisées pour indiquer une fiabilité et/ou une portée de communication correspondant à la ressource de transmission ; et
la sélection, par le dispositif terminal, d'un canal logique correspondant à la ressource de transmission sur la base des informations d'attribut de la ressource de transmission et des informations d'attribut de chaque canal logique.

2. Procédé selon la revendication 1, dans lequel le canal logique est un canal logique d'une liaison latérale, et la liaison latérale est une liaison de communication sans fil directe entre le dispositif terminal et un autre dispositif terminal.

3. Procédé selon la revendication 1 ou 2, dans lequel les informations d'attribut du canal logique comprennent un ou plusieurs parmi les éléments suivants :
un type de communication, un identifiant d'une adresse cible correspondant au canal logique, un identifiant d'une ressource de transmission, une densité spectrale de puissance de transmission, une perte sur le trajet, un schéma de modulation et de codage, une capacité multi-antenne, une quantité de répétitions de transmission, une quantité de duplications de protocole de convergence de données par paquets, PDCP, un taux d'occupation de canal de liaison latérale, une fiabilité, une portée de communication, ou une fiabilité plus une portée de communication, dans lequel le type de communication comprend au moins l'une parmi une multidiffusion, une diffusion et une monodiffusion.

4. Procédé selon l'une quelconque des revendications 1 à 3, dans lequel les informations d'attribut de la ressource de transmission comprennent un ou plusieurs parmi les éléments suivants :
un type de communication, un identifiant d'une adresse cible, un identifiant du canal logique, une densité spectrale de puissance de transmission, une perte sur le trajet, un schéma de modulation et de codage, une capacité multi-antenne, une quantité de répétitions de transmission, une quantité de duplications de protocole de convergence de données par paquets PDCP, un taux d'occupation de canal de liaison latérale, une fiabilité, une portée de communication, ou une fiabilité plus une portée de communication, dans lequel le type de communication comprend au moins l'une parmi une multidiffusion, une diffusion et une monodiffusion.

5. Procédé de communication, comprenant :
la génération, par un dispositif de réseau, d'informations de configuration ; et
l'envoi, par le dispositif de réseau, des informations de configuration à un dispositif terminal, dans lequel
les informations de configuration comprennent des informations d'attribut de chaque canal logique du dispositif terminal, et les informations d'attribut du canal logique sont utilisées pour indiquer une fiabilité et/ou une portée de communication du canal logique ; et
l'envoi, par le dispositif de réseau, d'informations de programmation au dispositif terminal, dans lequel les informations de programmation sont utilisées pour indiquer une ressource de transmission de la liaison latérale, les informations de programmation comprennent en outre des informations d'attribut de la ressource de transmission, les informations d'attribut de la ressource de transmission sont utilisées pour indiquer une fiabilité et/ou une portée de communication correspondant à la ressource de transmission, et les informations de programmation sont utilisées par le dispositif terminal pour sélectionner un canal logique correspondant à la ressource de transmission.

6. Procédé selon la revendication 5, dans lequel le canal logique est un canal logique d'une liaison latérale, et la liaison latérale est une liaison de communication sans fil directe entre le dispositif terminal et un autre dispositif terminal.

7. Procédé selon la revendication 5 ou 6, dans lequel les informations d'attribut du canal logique comprennent un ou plusieurs parmi les éléments suivants :
un type de communication, un identifiant d'une adresse cible correspondant au canal logique, un identifiant d'une ressource de transmission, une densité spectrale de puissance de transmission, une perte sur le trajet, un schéma de modulation et de codage, une capacité multi-antenne, une quantité de répétitions de transmission, une quantité de duplications de protocole de convergence de données par paquets, PDCP, un taux d'occupation de canal de liaison latérale, une fiabilité, une portée de communication, ou une fiabilité plus une portée de communication, dans lequel le type de communication comprend au moins l'une parmi une multidiffusion, une diffusion et une monodiffusion.

8. Appareil de communication, dans lequel l'appareil est configuré pour réaliser le procédé selon l'une quelconque des revendications 1 à 4.

9. Appareil de communication, dans lequel l'appareil est configuré pour réaliser le procédé selon l'une quelconque des revendications 5 à 7.

10. Appareil, comprenant un processeur, dans lequel le processeur est couplé à une mémoire, la mémoire est configurée pour stocker un programme ou des instructions, et lorsque le programme ou les instructions sont exécutés par le processeur, l'appareil est en mesure de réaliser le procédé selon l'une quelconque des revendications 1 à 4.

11. Appareil, comprenant un processeur, dans lequel le processeur est couplé à une mémoire, la mémoire est configurée pour stocker un programme ou des instructions, et lorsque le programme ou les instructions sont exécutés par le processeur, l'appareil est en mesure de réaliser le procédé selon l'une quelconque des revendications 5 à 7.

12. Support lisible par ordinateur, dans lequel le support de stockage lisible stocke un programme informatique ou des instructions, et lorsque le programme informatique ou les instructions sont exécutés, un ordinateur est en mesure de réaliser le procédé selon l'une quelconque des revendications 1 à 7.

13. Système de communication, comprenant l'appareil selon la revendication 8 et/ou l'appareil selon la revendication 9.
